# EUROPÄISCHE PATENTSCHRIFT

(11) **EP 0 670 424 B1**
(45) Veröffentlichungstag und Bekanntmachung des Hinweises auf die Patenterteilung: **21.05.1997**
(21) Anmeldenummer: 95102612.9
(22) Anmeldetag: 24.02.1995
(51) Int. Cl.: F02M 43/00

(54) **Einspritzanlage für die Einspritzung eines Kraftstoffs und einer Zusatzflüssigkeit in die Brennräume einer Brennkraftmaschine**
Injection system for injecting a fuel and an additional liquid into the combustion chambers of an internal combustion engine
Système d'injection pour injecter un combustible et un liquide additionnel dans les chambres de combustion d'un moteur à combustion interne

(30) Priorität: 03.03.1994 DE 4407052
(43) Veröffentlichungstag der Anmeldung: 06.09.1995
(73) Patentinhaber: MTU MOTOREN- UND TURBINEN-UNION FRIEDRICHSHAFEN GMBH, D-88045 Friedrichshafen (DE)
(72) Erfinder: Schönfeld, Dieter, Dipl.-Ing., D-88677 Markdorf (DE); Schmidt, Günther, Dipl.-Ing., D-88046 Friedrichshafen (DE)

(56) Entgegenhaltungen:
- WO-A-91/03640
- CH-A- 172 170
- DE-A- 2 154 822
- US-A- 4 481 921
- PATENT ABSTRACTS OF JAPAN vol. 10 no. 304 (M-526) [2360] ,16.Oktober 1986 & JP-A-61 116060

## Beschreibung

Es ist bekannt, zur Reduktion von Ruß- und Stickoxiden im Abgas einer Dieselbrennkraftmaschine zusammen mit dem Kraftstoff auch Wasser in die Zylinder einzuspritzen.

In der WO-A-91/03640 ist eine Einspritzanlage mit einer Einspritzdüse aufgezeigt, bei der das Wasser in der Einspritzdüse vor den Spritzlöchern zum Kraftstoff zugegeben wird. Die Einspritzdüse ist mit einer Düsennadel ausgebildet, die durch den Einspritzdruck des von einer Kraftstoffeinspritzpumpe über eine Einspritzleitung geförderten Kraftstoffs von ihrem Sitz am Düsenkörper abhebt, wodurch die Einspritzung des vor den Spritzlöchern anstehenden Kraftstoffs zusammen mit dem im Kraftstoff eingelagerten Wasser erfolgt. Die Einlagerung des Wassers im Kraftstoff erfolgt in den Einspritzpausen. Hierzu dient ein Trennkolben, der von Dieselkraftstoff, der von einer weiteren Hochdruckpumpe unter Druck gesetzt wird, beaufschlagt ist. Vom Arbeitsraum des Trennkolbens, der mittels einer Niederdruckpumpe mit Wasser gefüllt wird, wird das Wasser über eine separate Leitung der Einspritzdüse zugeführt, wo Wasser und Kraftstoff dann schließlich zusammenkommen. Der vom Wasser in der Einspritzdüse verdrängte Kraftstoff fließt über die Kraftstoffeinspritzpumpe ab. Dabei ist der in der Einspritzleitung herrschende Standdruck zu überwinden, der von einem federbelasteten, zur Kraftstoffeinspritzpumpe hin öffnenden Rückschlagventil aufrechterhalten wird. Ein weiteres Rückschlagventil in der Leitung für die Wasserzuführung sorgt dafür, daß während der Einspritzung ein Zurückströmen von Wasser aus der Einspritzdüse unterbleibt.

Eine entsprechende Einspritzanlage ist auch in der Zeitschrift Diesel & Gas Turbine Worldwide, November 1993, "NOx Reduction by Stratified Fuel-Water Injection in Diesel Engines", Seiten 32 bis 36 dargestellt. Bei dieser Einrichtung, bei der das Wasser in der Einspritzdüse als Schicht zwischen dem Kraftstoff eingelagert wird, und geschichtet in den Brennraum der Brennkraftmaschine eingebracht wird, besteht die Möglichkeit mittels eines Ventils in der zum Trennkolben führenden Hydraulikleitung den Arbeitshub des Trennkolbens und damit die Menge des zuzuführenden Wassers in Abhängigkeit vom Motorbetrieb zu ändern, gegebenenfalls ganz abzustellen.

Nachteilig an den oben beschriebenen Einspritzanlagen ist der hohe apparative Aufwand, der sich aufgrund der notwendigen zusätzlichen Hochdruckpumpe zur hydraulischen Betätigung des Trennkolbens ergibt.

Aus der US-A-44 81 921 die den nächstkommenden Stand der Technik bildet geht eine Einspritzanlage als bekannt hervor, bei der mittels einer Hochdruckpumpe eine erste Kraftstoffsorte einer ersten Einspritzdüse zugeführt wird. Eine zweite Kraftstoffsorte wird durch eine weitere Pumpe in einen Raum vor einem Kolben gefördert, der sich in einem Verbindungskanal zwischen den zwei Kraftstoffleitungen für die beiden Kraftstoffsorten befindet. Die Förderung des im Raum vor dem Kolben eingelagerten Kraftstoffs zu einer zweiten Einspritzdüse erfolgt durch den Kolben, der bei der Einspritzung vom Kraftstoffdruck der ersten Kraftstoffsorte beaufschlagt wird. Wenn nämlich eine Einspritzung der ersten Einspritzdüse erfolgt und der Druck in der Leitung mit der ersten Kraftstoffart auf den Einspritzdruck erhöht wird, wird zugleich auch der Kolben von einer ersten in eine zweite Stellung gedrückt, wobei in einer anderen, zweiten Einspritzdüse vom Kolben geförderter Kraftstoff der zweiten Sorte eingelagert wird. Wenn später die zweite Einspritzdüse mit dem Einspritzdruck beaufschlagt wird, wird zugleich wieder über einen weiteren Kolben Kraftstoff der zweiten Sorte in einer dritten Einspritzdüse vorgelagert usw. Nachteilig an diesem Einspritzsystem ist insbesondere, daß bei der Vorlagerung der zweiten Kraftstoffart in der Einspritzdüse die Einspritzung in der anderen Einspritzdüse dadurch gestört wird, daß infolge der Kolbenbewegung eine Druckabsenkung stattfindet und damit nicht der volle, von der Hochdruckpumpe erzeugbare Einspritzdruck vorliegt, damit also die Einspritzung gestört ist. Weiter ist von Nachteil, daß die vom Kolben geförderte Kraftstoffmenge infolge des festliegenden, immer gleich großen Kolbenhubs in allen Betriebszuständen unveränderlich gleich ist. Darüberhinaus ist als Nachteil zu erkennen, daß die Vorlagerung einer zweiten Kraftstoffsorte nicht abschaltbar ist.

Der im Patentanspruch 1 angegebenen Erfindung liegt das Problem zugrunde, eine Einspritzanlage aufzuzeigen, bei der die Vorlagerung einer Zusatzflüssigkeit in der Einspritzdüse ohne Störung der Einspritzung erfolgt, wobei der apparative Aufwand gering ist.

Dieses Problem wird durch die im Patentanspruch 1 aufgeführten Merkmale gelöst. Die für die Einspritzung benötigte Kraftstoffeinspritzpumpe wird auch zum Antrieb des Trennkolbens benutzt. Während der Einspritzung arbeitet die Kraftstoffeinspritzpumpe in der üblichen Weise, nämlich durch Hubbetätigung ihres Kolbens durch einen Nocken einer Nockenwelle. In den Einspritzpausen kommt ein zusätzlich vorgesehener Nocken der Nockenwelle zum Eingriff, der mit dem anderen Nocken zusammen einen Doppelnocken bildet. Der von der Kraftstoffeinspritzpumpe durch den zusätzlichen Nocken geförderte Kraftstoff dient zur Beaufschlagung des Trennkolbens mit unter Druck gesetztem Kraftstoff. Der auf diese Weise durch den Kraftstoffdruck beaufschlagte Trennkolben wird in seiner Lage verschoben und dadurch die Einlagerung von Wasser in der Einspritzdüse bewirkt. Außer dem zusätzlichen Nocken werden Ventile benötigt, die den Arbeitsraum der Kraftstoffeinspritzpumpe in geeigneter Weise entweder mit der Einspritzleitung oder mit der zum Trennkolben führenden Hydraulikleitung verbinden. Nach Anspruch 2 kann das Ventil zur Steuerung des Kraftstofflußes als 4/2-Wegeventil ausgebildet sein. Nach Anspruch 3 wird mit einem 3/2-Wegeventil in der Hydraulikleitung zum Trennkolben die Möglichkeit gegeben, die Wasserzufuhr bei Bedarf unabhängig vom Nockenprofil zu verändern oder auch gänzlich zu stoppen.

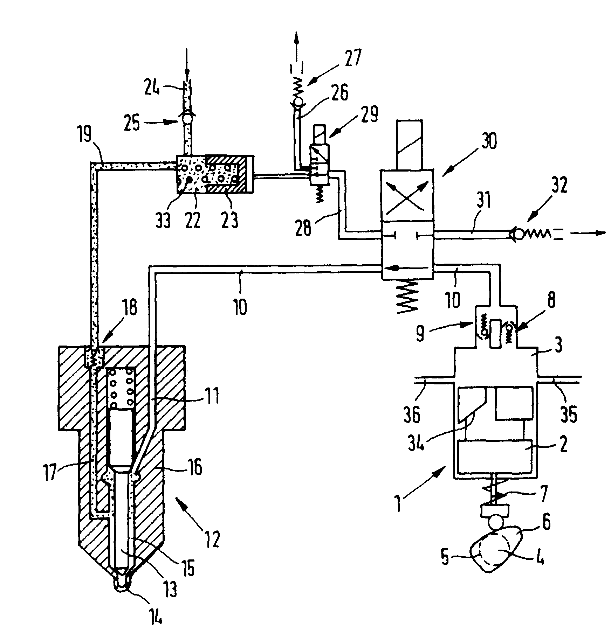

Ein Ausführungsbeispiel der Erfindung ist in der Zeichnung dargestellt und wird im folgenden näher erläutert; es zeigt die einzige Figur eine Prinzipskizze der Einspritzanlage.

Mit der in der einzigen Figur im Prinzip dargestellten Einspritzanlage für eine Brennkraftmaschine soll zusammen mit dem Kraftstoff in einer Schicht zwischen dem Kraftstoff eingelagerte Zusatzflüssigkeit, insbesondere Wasser, in die Brennräume einer Brennkraftmaschine eingespritzt werden. Hierzu ist eine Kraftstoffeinspritzpumpe 1 vorgesehen, deren Kolben 2 über einen Rollenstößel 7 von einem Doppelnocken auf einer Nockenwelle 4 angetrieben wird. Eine üblicherweise zwischen der Kraftstoffeinspritzpumpe 1 und einem Kraftstofftank vorgesehene Förderpumpe ist in der Zeichnung nicht dargestellt. Vom Druckraum 3 der Kraftstoffeinspritzpumpe 1 gelangt der Kraftstoff über eine Einspritzleitung 10 und einen Kraftstoffkanal 11 im Düsenkörper 16 in einen Ringkanal 15 zwischen dem Düsenkörper 16 und einer Düsennadel 13. Die Rückschlagventile 8 und 9 wirken dabei als Gleichdruckventil. Das Rückschlagventil 8 bewirkt den Abbau von sich bei der Einspritzung in der Einspritzleitung bildenden Druckwellen und verhindert dadurch ein Nachspritzen. Insbesondere wird durch das federbelastende Rückschlagventil 8, das in Richtung zur Kraftstoffeinspritzpumpe 1 hin öffnet, auch ein vorgegebener Standdruck (ca. 100 bar) in der Einspritzleitung aufrechterhalten. Es wird damit in den Einspritzpausen ein zu tiefer Druckabfall vermieden, so daß Kavitation nicht auftritt. Durch den Kraftstoffdruck der von einem Nocken 6 angetrieben Kraftstoffeinspritzpumpe wird während der Einspritzung die Düsennadel 13 angehoben und über die Spritzlöcher 14 Kraftstoff zusammen mit im Ringkanal 15 eingelagertem Wasser in die Brennräume der Brennkraftmaschine eingespritzt. Das in der Figur durch Punkte dargestellte Wasser wird über eine Leitung 19 und einen zum Kraftstoffkanal 11 separaten Kanal 17 in den Ringkanal 15 zugeleitet. Der Kanal 17 ist über ein Rückschlagventil 18 und eine Leitung 19 mit dem Arbeitsraum 22 eines Trennkolbens 23 verbunden. Anstelle des Rückschlagventils 18 können auch zwei parallel geschaltete, entgegengesetzt öffnende nicht dargestellte Rückschlagventile vorgesehen sein, die auch als Gleichdruckventil wirken. In den Arbeitsraum 22 wird das Wasser über eine ein Rückschlagventil 25 enthaltende Leitung 24 durch eine nicht dargestellte Niederdruckpumpe aus einem ebenfalls nicht dargestellten Vorratstank entnommen. Die Zufuhr von Wasser zur Einspritzdüse 12 erfolgt in den Einspritzpausen durch Beaufschlagung des Trennkolbens 23 mit einer Hydraulikflüssigkeit. Als Hydraulikflüssigkeit dient der von der Kraftstoffeinspritzpumpe 1 in den Einspritzpausen in die Hydraulikleitung 28 geförderte Kraftstoff. Zur Förderung von Kraftstoff in den Einspritzpausen dient ein Nocken 5, der zusammen mit dem Nocken 6 einen Doppelnocken darstellt. Damit der in den Einspritzpausen geförderte Kraftstoff in die Hydraulikleitung 28 gelangt, ist der Druckraum 3 der Kraftstoffeinspritzpumpe 1 mit der Hydraulikleitung 28 zu verbinden. Diesem Zweck dient das Ventil 30. Das Ventil 30, das als 4/2-Wegeventil ausgebildet ist, sperrt in der dargestellten ersten Schaltstellung die Hydraulikleitung 28, während die Einspritzleitung 10 freigegeben ist. In dieser ersten Schaltstellung erfolgt die Einspritzung. In der zweiten Schaltstellung ist der Druckraum 3 der Kraftstoffeinspritzpumpe 1 mit der Hydraulikleitung 28 verbunden. Zugleich ist das mit der Einspritzdüse 12 verbundene Leitungsstück der Einspritzleitung 10 über einen Durchgang im Ventil 30 mit einer Rücklaufleitung 31 verbunden, die über ein Rückschlagventil 32 zum Kraftstofftank führt. Das Rückschlagventil 32 öffnet bei einem Druck oberhalb des Standdrucks und unterhalb des Einspritzdrucks. In dieser zweiten Schaltstellung des Ventils 30 erfolgt die Beaufschlagung des Trennkolbens 23 mit dem Kraftstoffdruck und die Förderung von Wasser zur Einspritzdüse 16 über das Rückschlagventil 18, wobei der in der Einspritzleitung herrschende Standdruck zu überwinden ist. Zugleich kann der verdrängte Kraftstoff über die Rücklaufleitung 31 zum Kraftstofftank zurückfließen. Nach dem Umschalten des Ventils 30 in die erste Schaltstellung erfolgt die Einspritzung, während zugleich der Trennkolben 23 unter der Wirkung der Druckfeder 33 und dem in der Leitung 19 herrschenden Wasserdruck in seine Ausgangslage zurückkehrt. Das Umschalten des Ventils 30 kann elektrisch synchron zur Nockenwellenstellung erfolgen oder mechanisch.

Die Kraftstofförderpumpe wird durch Verdrehung des Kolben 2 der Kraftstoffeinspritzpumpe 1 gesteuert. Dazu ist der Kolben 2 beispielsweise über Zahnsegmente mit einer Regelstange verbunden, wie jedoch nicht näher dargestellt ist. Von der Lage der schrägen Steuerkante 34 hängt es ab, ob die Steuerbohrungen 35, 36 früher oder später geöffnet werden. Eine Veränderung der Kraftstoffmenge durch Verdrehung des Kolbens 2 bewirkt auch eine gleichgerichtete Veränderung der eingespritzten Wassermenge, so daß ein festes Verhältnis von Kraftstoff zu Wasser eingehalten werden kann.

Durch das Ventil 29, das als 3/2-Wegeventil ausgebildet ist und in der Hydraulikleitung 28 angeordnet ist, kann bei Bedarf die Einlagerung von Wasser in der Einspritzdüse gestoppt werden. In einer ersten dargestellten Schaltstellung des Ventils 29 kann die Beaufschlagung des Trennkolbens mit Kraftstoffdruck erfolgen. In einer zweiten Schaltstellung ist die Hydraulikleitung 28 über eine Rücklaufleitung 26 und ein Rückschlagventil 27 mit dein Kraftstofftank verbunden, so daß das in den Einspritzpausen von der Kraftstoffeinspritzpumpen 1 geförderte Kraftstoff nicht zur Betätigung des Trennkolbens 23 führt und damit die Wassereinspritzung abgestellt ist.

Die dargestellte Einspritzanlage ermöglicht es, mit der Kraftstoffeinspritzpumpe als Hochdruckpumpe sowohl Kraftstoff wie auch eine Zusatzflüssigkeit zu einer Einspritzdüse 16 zu fördern und damit den apparativen Aufwand klein zu halten.

## Patentansprüche

1. Einspritzanlage für die Einspritzung eines Kraftstoffs und einer Zusatzflüssigkeit in die Brennräume einer Brennkraftmaschine, mit einer Einspritzdüse (12) mit auf einem Düsennadelsitz des Düsenkörpers (16) aufsitzender und unter dem Einspritzdruck einer durch einen Nocken (6) einer Nockenwelle (4) betriebenen Kraftstoffeinspritzpumpe (1) öffnenden Düsennadel (13), wobei der Zusatz der Zusatzflüssigkeit zum Kraftstoff in der Einspritzdüse (12) mittels eines Trennkolbens (23) in den Einspritzpausen in das unter einem von Ventilen aufrechterhaltenen Standdruck stehende Leitungssystem für den Kraftstoff erfolgt, wobei das von der Zusatzflüssigkeit verdrängte Kraftstoffvolumen über ein Ventil (32) abfließt, das bei Drücken oberhalb des Standdrucks öffnet, wobei ferner die Einspritzdüse (12) mit einer von der Kraftstoffeinspritzpumpe (1) zur Einspritzdüse (12) führenden Einspritzleitung (10) für den Kraftstoff und einer vom Arbeitsraum (22) des Trennkolbens (23) zur Einspritzdüse (12) führenden Leitung (19) für die Zufuhr der Zusatzflüssigkeit verbunden ist, und wobei ferner der Trennkolben (23) über eine Hydraulikleitung (28) von unter Druck gesetztem Kraftstoff beaufschlagbar ist, wobei zur Beaufschlagung des Trennkolbens (23) in den Einspritzpausen von der Kraftstoffeinspritzpumpe (1) geförderter Kraftstoff dient, wobei die Förderung des Kraftstoffs in den Einspritzpausen durch einen zusätzlichen Nocken (5) auf der Nockenwelle (4) erfolgt, dadurch gekennzeichnet, daß der zusätzliche Nocken (5) mit dem bei der Einspritzung wirksamen Nocken (6) als Doppelnocken ausgebildet ist, und daß der Ausgang der Kraftstoffeinspritzpumpe (1) durch ein synchron zur Nockenwellenstellung steuerbares Ventil (30) abwechselnd mit der Einspritzleitung (10) und der zum Trennkolben (23) führenden Hydraulikleitung (28) verbunden ist.

2. Einrichtung nach Anspruch 1, dadurch gekennzeichnet, daß das Ventil (30) als 4/2-Wegeventil ausgebildet ist, das in einer ersten Schaltstellung während der Einspritzung die Einspritzleitung (10) offen hält und die Hydraulikleitung (28), die zum Trennkolben (23) führt, sperrt, und in einer zweiten Schaltstellung den Ausgang der Kraftstoffeinspritzpumpe (1) mit der Hydraulikleitung (28) verbindet und das mit der Einspritzdüse (12) verbundene Leitungsstück der Einspritzleitung (10) mit einer ersten Rücklaufleitung (31) verbindet, in der ein Rückschlagventil (32) angeordnet ist, das bei Drücken oberhalb des Standdrucks öffnet.

3. Einrichtung nach Anspruch 1 oder 2, dadurch gekennzeichnet, daß in der Hydraulikleitung (28) ein 3/2-Wegeventil (29) angeordnet ist, das in einer ersten Schaltstellung den Zufluß von Kraftstoff zum Trennkolben (23) zuläßt und in einer zweiten Schaltstellung die Hydraulikleitung (28) mit einer zweiten Rücklaufleitung (26) verbindet.

## Claims

1. Injection system for injecting a fuel and an additional liquid into the combustion spaces of an internal combustion engine, with an injection nozzle (12) having a nozzle needle (13) which sits on a nozzle-needle seat of the nozzle body (16) and which opens under the injection pressure of a fuel injection pump (1) operated by a cam (6) of a camshaft (4), the additional liquid being added to the fuel in the injection nozzle (12) by means of a separating piston (23) in the injection intermissions into the fuel conduit system which is under a static pressure maintained by valves, the fuel volume displaced by the additional liquid flowing off via a valve (32) which opens at pressures above the static pressure, furthermore the injection nozzle (12) being connected to a fuel injection conduit (10) leading from the fuel injection pump (1) to the injection nozzle (12) and being connected to a conduit (19) leading from the working space (22) of the separating piston (23) to the injection nozzle (12) and intended for supplying the additional liquid, and, furthermore, pressurized fuel being capable of being applied to the separating piston (23) via a hydraulic conduit (28), fuel fed by the fuel injection pump (1) serving to be applied to the separating piston (23) in the injection intermissions, the feed of fuel in the injection intermissions being carried out by means of an additional cam (5) on the camshaft (4), characterized in that the additional cam (5), together with the cam (6) taking effect during injection, is designed as a double cam, and in that the outlet of the fuel injection pump (1) is connected alternately, by means of a valve (30) controllable synchronously with the camshaft position, to the injection conduit (10) and to the hydraulic conduit (28) leading to the separating piston (23).

2. Device according to Claim 1, characterized in that the valve (30) is designed as a 4/2-way valve which, in a first switching position, keeps the injection conduit (10) open during injection and shuts off the hydraulic conduit (28) leading to the separating piston (23) and, in a second switching position, connects the outlet of the fuel injection pump (1) to the hydraulic conduit (28) and connects that conduit section of the injection conduit (10) which is connected to the injection nozzle (12) to a first return conduit (31), in which a non-return valve (32) opening at pressures above the static pressure is arranged.

3. Device according to Claim 1 or 2, characterized in that the hydraulic conduit (28) has arranged in it a 3/2-way valve (29) which, in a first switching position, allows the inflow of fuel to the separating piston (23) and, in a second switching position, connects the hydraulic conduit (28) to a second return conduit (26).

## Revendications

1. Dispositif d'injection pour injecter un combustible et un liquide additionnel dans les chambres de combustion d'un moteur à combustion interne, avec un injecteur (12) avec un pointeau (13) appliqué sur un siège de pointeau du corps d'injecteur (16) et s'ouvrant sous la pression d'injection d'une pompe d'injection (1) actionnée par une came (6) d'un arbre à cames (4), dans lequel l'ajout du liquide additionnel au combustible est effectué dans l'injecteur (12) pendant les pauses d'injection, au moyen d'un piston séparé (23), dans le réseau de conduites destinées au combustible maintenu par des soupapes sous une pression fixe, dans lequel le volume de combustible déplacé par le liquide additionnel s'écoule par une soupape (32) qui s'ouvre pour des pressions supérieures à la pression fixe, dans lequel en outre l'injecteur (12) est raccordé à une conduite d'injection (10) menant de la pompe d'injection de combustible (1) à l'injecteur (12) pour le combustible et à une conduite (19) menant de la chambre de travail (22) du piston séparé (23) à l'injecteur (12) pour l'ajout du liquide additionnel, et dans lequel en outre le piston séparé (23) peut être alimenté par une conduite hydraulique (28) en combustible mis sous pression, dans lequel un combustible fourni par la pompe d'injection de combustible (1) pendant les pauses d'injection sert à l'alimentation du piston séparé (23), dans lequel le transport du combustible pendant les pauses d'injection est opéré par une came supplémentaire (5) sur l'arbre à cames (4), caractérisé en ce que la came supplémentaire (5) constitue une double came avec la came (6) active lors de l'injection, et en ce que la sortie de la pompe d'injection de combustible (1) est raccordée par une soupape (30) à commande synchrone avec la position de l'arbre à cames alternativement avec la conduite d'injection (10) et avec la conduite hydraulique (28) menant au piston séparé (23).

2. Dispositif suivant la revendication 1, caractérisé en ce que la soupape (30) est constituée par une soupape à 4/2 voies, qui dans une première position maintient ouverte la conduite d'injection (10) pendant l'injection et obture la conduite hydraulique (28) qui mène au piston séparé (23), et dans une seconde position raccorde la sortie de la pompe d'injection de combustible (1) avec la conduite hydraulique (28) et raccorde le tronçon de la conduite d'injection (10) relié à l'injecteur (12) avec une première conduite de retour (31), dans laquelle est disposée une soupape anti-retour (32) qui s'ouvre pour des pressions supérieures à la pression fixe.

3. Dispositif suivant la revendication 1 ou 2, caractérisé en ce que dans la conduite hydraulique (28) est disposée une soupape à 3/2 voies (29), qui dans une première position permet le passage de combustible vers le piston séparé (23) et dans une seconde position raccorde la conduite hydraulique (28) avec une seconde conduite de retour (26).
